# EUROPÄISCHE PATENTSCHRIFT

(11) **EP 1 031 591 B1**
(45) Veröffentlichungstag und Bekanntmachung des Hinweises auf die Patenterteilung: **10.12.2003**
(21) Anmeldenummer: 00102219.3
(22) Anmeldetag: 10.02.2000
(51) Int. Cl.: C08G 75/23, C08G 65/40, C08G 75/20, C08G 81/00

(54) **Verfahren zur Herstellung von Polyetherblockcopolysulfonen**
Process for preparing polyether-polysulfone block copolymers
Procédé pour la préparation de copolymères bloc de polyéther-polysulphone

(30) Priorität: 23.02.1999 DE 19907605
(43) Veröffentlichungstag der Anmeldung: 30.08.2000
(73) Patentinhaber: BAYER AG, 51368 Leverkusen (DE)
(72) Erfinder: Reuter, Knud, Dr., 47800 Krefeld (DE); Schultz, Claus-Ludolf, Dr., 47803 Krefeld (DE); Wollborn, Ute, Dr., 47800 Krefeld (DE); Pudleiner, Heinz, Dr., 47800 Krefeld (DE)

(56) Entgegenhaltungen:
- EP-A- 0 092 726
- EP-A- 0 739 925
- US-A- 4 010 147

## Beschreibung

Polyetherblockcopolysulfone (im folgenden PEBSU genannt) unterschiedlichen Aufbaus und Verfahren zur Herstellung sind bekannt (z.B. EP-A 739.925, EP-A 781.795, US-A 5.700.902, US-A 5 798 437, US-A 5 834 583 und Macromolecules 1996, 29 (23) 7619-7621. Sie sind wertvolle Materialien, z.B. für biomedizinische Anwendungen mit einem großen Einsätzpotential für Dialysemembranen, Katheter oder Blutschläuche u. a..

Die im genannten Stand der Technik beschriebenen Verfahren bauen die Polyetherblockcopolysulfone aus den Monomerbausteinen auf.

Die Verfahren des Standes der Technik haben den Nachteil, dass sie nur mit dem speziellen, auf die Polysulfon-Herstellung zugeschnittenen "equipment" sowie in den für technische Thermoplaste üblichen großen Tonnagen (einige 1000 jato) wirtschaftlich ausgeübt werden können. Die Spezialanwendungen der PEBSU auf dem Medizintechnik-Gebiet erfordern dagegen die Möglichkeit, wirtschaftlich ein Sortiment kleinerer Produkte in unterschiedlichen Typen herstellen zu können. Es besteht somit ein technischer Bedarf nach einem auch in kleinen Mengen wirtschaftlichen, hoch variablen (bezogen auf die Zusammensetzung der Edukte) und damit sehr einfachen Verfahren zur Herstellung der PEBSU. Dieses Verfahren soll ferner apparativ geringe Ansprüche stellen, um die Voraussetzungen für eine wirtschaftliche Herstellung für Produkte mit Anwendungen im medizinischen Bereich zu schaffen.

Überraschend wurde gefunden, dass sich PEBSU aus unmodifizierten Sulfonpolymeren durch nachträgliche Umsetzung mit hydroxyl-funktionellen Polyethern herstellen lassen (Umetherung). Der Begriff "Sulfonpolymer" soll dabei für alle aromatischen Sulfonpolymeren aus der Gruppe der eigentlichen Polysulfone (PSU), Polyethersulfone (PES) oder Polyarylethersulfone (PAES) stehen.

Gegenstand der vorliegenden Erfindung ist somit ein Verfahren zur Herstellung von Polyetherblockcopolysulfonen, gekennzeichnet dadurch, dass
ein aromatisches Sulfonpolymer (A) mit einem aliphatischen Polyether mit mindestens einer, vorzugsweise mindestens zwei endständigen OH-Funktionen (B) umgesetzt wird.

Bevorzugt wird dabei ein Verfahren, bei dem die Komponenten (A) und (B) in Gegenwart eines basischen Katalysators (C) umgesetzt werden.

Bevorzugt wird die Umsetzung in einem dipolaren aprotischen Lösemittel (D) durchgeführt.

Bevorzugte Sulfonpolymere (A) sind aromatische Sulfonpolymere mit der Wiederholungseinheit (I)

- E - Ar¹ - SO₂ - Ar² - (I)

worin
- E: ein zweibindiger Diphenolat-Rest ist und
- Ar¹ und Ar²: gleiche oder verschiedene difunktionelle aromatische Reste mit 6 bis 50, vorzugsweise 6 bis 25, Kohlenstoffatomen bedeuten.
- Ar¹ und Ar²: stehen vorzugsweise unabhängig voneinander für einen gegebenenfalls ein- bis mehrfach durch C₁-C₁₂-Alkyl substituierten aromatischen Rest mit 6 bis 10 Kohlenstoffatomen
und
- E: steht vorzugsweise für einen Rest der Formel (II) 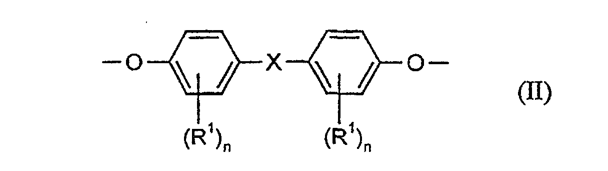
wobei
- R¹: jeweils unabhängig voneinander, gleich oder verschieden für Wasserstoff, Halogen, C₁-C₆-Alkyl oder C₁-C₆-Alkoxy, vorzugsweise für Wasserstoff, Fluor, Chlor, Brom, steht,
- n: für eine ganze Zahl 1 bis 4, vorzugsweise 1, 2 oder 3, insbesondere 1 oder 2 steht,
- X: für eine chemische Bindung, -CO-, -O-, -S-, -SO₂-, für Alkylen, vorzugsweise C₁-C₈-Alkylen, Alkyliden, vorzugsweise C₂-C₁₀-Alkyliden, oder Cycloalkylen steht, wobei die 3 letztgenannten Reste durch Substituenten, ausgewählt aus Halogen, insbesondere Fluor, Chlor, Brom, gegebenenfalls durch Fluor, Chlor, Brom, C₁-C₄-Alkyl- und/oder C₁-C₄-Alkoxy- substituiertes Phenyl oder Naphthyl substituiert sein können und wobei Cycloalkylen zusätzlich noch durch C₁-C₆-Alkyl substituiert sein kann.

Für den Fall, dass X für Cycloalkylen steht, steht X vorzugsweise für einen Rest der Formel (III), 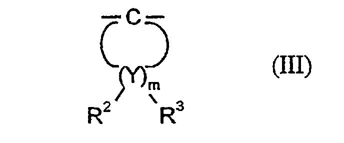 worin
- Y: für Kohlenstoff steht,
- R² und R³: für jedes Y individuell wählbar, unabhängig voneinander Wasserstoff oder C₁-C₆-Alkyl, besonders bevorzugt für Wasserstoff oder C₁-C₄-Alkyl, insbesondere Wasserstoff, Methyl oder Ethyl steht und
- m: für eine ganze Zahl von 3 bis 12, vorzugsweise 4 bis 8, insbesondere 4 oder 5, steht.
- Ar¹ und Ar²: stehen insbsondere unabhängig voneinander für gegebenenfalls durch C₁-C₄-Alkyl, z.B. Methyl substituiertes Phenyl oder Naphthyl.

Besonders bevorzugte Sulfonpolymere sind z. B. das Polysulfon aus Bisphenol A (kommerziell erhältlich unter den Namen Udel™ von Fa. Amoco, Chicago, USA oder Ultrason^{R} S von Fa. BASF), ein Polyethersulfon der idealisierten Struktur - (O-C₆H₄-SO₂-C₆H₄-)ₓ, (kommerziell erhältlich z.B. unter den Namen Ultrason E von Fa. BASF und SumikaExcel von Fa. Sumitomo, Japan), das Polyarylethersulfon mit 4,4'-Dihydroxydiphenyl-Strukturen der Fa. Amoco (Radel R), oder Polysulfone mit TMC-Bisphenol-Strukturen gemäß DE-OS 3.833.385. Alle genannten Sulfonpolymer-Typen können dabei gegebenenfalls in unterschiedlichen Typen, was das Molekulargewicht angeht, eingesetzt werden. Die Auswahl wird dabei von den gewünschten Molekulargewichten der Endprodukte bestimmt. Im allgemeinen haben die Sulfonpolymere mittlere Molekulargewichte (Gewichtsmittel) 5000 bis 100.000, vorzugsweise 3000 bis 75.000 gemessen mittels Gelpermeationschromatographie (GPC) gegen Polystyrolstandard. Besonders bevorzugt ist auf Bisphenol A basierendes Polysulfon.

Erfindungsgemäß einzusetzende aliphatische Polyether (B) sind Hydroxylgruppen aufweisende Polyether mit mindestens einer, insbesondere zwei bis acht Hydroxylgruppen und einem Molekulargewicht (Zahlenmittel) von 400 bis 25.000, berechnet aus der Hydroxylzahl in Verbindung mit der Funktionalität. Solche Polyether mit mindestens einer, vorzugsweise zwei bis drei, besonders bevorzugt zwei Hydroxylgruppen sind bekannt und werden z. B. durch Polymerisation von Ethylenoxid, Propylenoxid, Butylenoxid, Tetrahydrofuran oder Styroloxid mit sich selbst, z. B. in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether (z.B. DE-AS 1 176 358 und 1 064 938) sowie auf Formit oder Formose gestartete Polyether (DE-OS 2 639 983 bzw. 2 737 951), kommen erfindungsgemäß in Frage.

Es sind solche Polyether bevorzugt, die überwiegend (bezogen auf alle OH-Gruppen im Polyether) primäre OH-Gruppen aufweisen. Bevorzugt weisen die Polyether mindestens 90 Gew.-% primäre OH-Gruppen auf, besonders bevorzugt 100 Gew.-% bzw. um 100 Gewichtsprozent.

Komponente B) umfaßt auch Polythioether, insbesondere die Kondensationsprodukte von Thiodiglykol mit sich selbst und/oder mit anderen Glykolen oder Formaldehyd.

Ferner kommen Polyacetale, z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß einzusetzende Verbindungen (B) herstellen.

Bevorzugte aliphatischer Polyether (B) sind Polyether der allgemeinen Strukturformel

H-(O-(CH₂-CH₂)ₙ-)ₘ-OH

mit n = 1 oder 2 und m = natürliche Zahl von 1 bis 500.

Besonders bevorzugte aliphatische Polyether sind z. B. Polyethylenglykol mit Molekulargewichten von 400 bis 20.000 (Zahlenmittel) und einer OH-Funktionalität von ungefähr 2 oder Polytetrahydrofuran mit einem Molekulargewicht von ca. 500 bis 10.000 und einer OH-Funktionalität von ungefähr 2.

Es können auch Mischungen von zwei oder mehreren verschiedenen Polyethern eingesetzt werde, wobei "verschieden" sich sowohl auf die chemische Struktur als auch auf das Molekulargewicht des Polyethers beziehen kann.

Die Polyetherblockcopolysulfone haben im allgemeinen Molekulargewichte zwischen 5000 und 100.000, bevorzugt zwischen 10.000 und 75.000, Gewichtsmittel gemessen mitels GPC gegen Polystyrol-Standard.

Prinzipiell geeignete basische Katalysatoren (C) sind z.B. Carbonate wie Lithiumcarbonat, Natriumcarbonat, Natriumhydrogencarbonat, Kaliumcarbonat, Kaliumhydrogencarbonat, Caesiumcarbonat, Magnesiumcarbonat, Calciumcarbonat. Besonders bevorzugt wird Kaliumcarbonat eingesetzt. Die Mengen des basischen Katalysators richten sich im wesentlichen nach der in Reaktion zu bringenden Menge an Polyether. Bei Carbonat-Katalysatoren wird bevorzugt ein Überschuß an Katalysator, bezogen auf die Menge an im Reaktionsgemisch vorliegenden OH-Gruppen, eingesetzt. Auch andere basische Salze sind als Katalysator geeignet; beispielhaft seien Natriumphosphat und insbesondere Kaliumphosphat, aber auch Dikalium-monohydrogen-phosphat genannt. Auch Amine sind prinzipiell als Katalysatoren geeignet, sofern ausreichende Basizität vorliegt, wie z.B. bei Diazabicyclooctan (DABCO). Weiterhin eignen sich Metallhydroxide, besonders Alkalimetallhydroxide wie Lithiumhydroxid, Natriumhydroxid und Kaliumhydroxid als Katalysatoren für das erfindungsgemäße Verfahren. Diese Katalysatoren werden bevorzugt in stöchiometrischen Mengen, bezogen auf die Anzahl der im Reaktionsgemisch vorliegenden Hydroxylgruppen, eingesetzt.

Bevorzugte dipolare aprotische Lösemittel (D) sind Dimethylsulfoxid, Sulfolan, N-Methylpyrrolidon, N-Methylcaprolactam, N,N-Dimethylformamid, N,N-Dimethylacetamid. Besonders bevorzugt wird Dimethylsulfoxid.

Gegebenenfalls können auch zwei oder mehrere dipolare aprotische Lösemittel im Gemisch eingesetzt werden.

Mischungen des dipolaren aprotischen Lösemittel mit unpolaren, aliphatischen, cycloaliphatischen oder bevorzugt aromatischen Lösemittel (z.B. Toluol, Xylol(e), Chlorbenzol oder o-Dichlorbenzol) können ebenfalls eingesetzt werden. Der Volumenanteil an dipolarem aprotischem Lösemittel soll dabei nicht unter 50 % betragen.

Die Umsetzung wird bei erhöhter Temperatur, bevorzugt bei 60 bis 230°C, besonders bevorzugt bei 130 bis 200°C durchgeführt. Die Wahl der Umsetzungstemperatur ist auf das verwendete Lösemittel (oder Lösemittelgemisch) abzustimmen, z.B. wird in Dimethylsulfoxid (DMSO) oder Gemischen mit DMSO (z.B. DMSO/Toluol) ein Temperaturbereich von 130 bis 160°C bevorzugt, während in N-Methylpyrrolidon (NMP) oder Gemischen mit NMP die Reaktion bevorzugt bei 170 bis 200°C durchgeführt wird.

Prinzipiell ist es auch möglich, die Sulfonpolymeren (A) und aliphatischen Polyether (B) unter Basenkatalyse mittels (C) ohne Lösungsmittel zur Reaktion zu bringen. In diesem Fall muß die Temperatur auf 200 bis 400°C, bevorzugt 230 bis 350°C erhöht werden. Für ausreichende Durchmischung der Polymerschmelze ist dann, z.B. mittels Durchführung der Reaktion auf einem Extruder, zu sorgen.

Die Aufarbeitung und Isolierung des Polymeren kann in der von der Polysulfon-Chemie (z.B. entsprechend US-P 4.108.837 oder DE-OS 3.833.385) bekannten Weise, oder auch analog den in den o. g. Patentschriften, die Polyetherblockcopolysulfone zum Gegenstand haben (z.B. EP-A 739.925), beschriebenen Verfahren erfolgen. Die Aufarbeitung ist jedoch nicht kennzeichnender Teil des erfindungsgemäßen Verfahrens, und dem mit der Polymerchemie, speziell der Polysulfonchemie vertrauten Fachmann stehen zahlreiche geeignete Methoden zur Verfügung.

Als Nebenprodukte bei der Umetherung entstehen im allgemeinen kleine Mengen von Bisphenol gemäß der Formel HO-E-OH oder Anionen davon (^{⊖}O-E-O^{⊖}). Diese werden bei der Aufarbeitung durch Waschen entfernt.

Die Mengen an einzubauendem di-hydroxy-funktionellem Polyether können sehr breit variiert werden, beispielsweise zwischen 0,1 und 90, bevorzugt zwischen 1 und 60, ganz besonders bevorzugt zwischen 5 und 50 Gew.-% Polyether, bezogen auf das Gesamtgewicht des segmentierten Polykondensats. Je nach eingebauter Polyether-Menge erhält man Produkte mit unterschiedlichem Einsatzpotential. Z.B. ergeben sich auf dem Medizintechnik-Gebiet bei niedrigen PEO-Mengen (PEO = Polyethylenoxid) bis ca. 25 Gew.-% relativ steife Materialien, die z. B. für Gehäuse oder für Folien und Membranen, speziell Dialysemembranen, in Frage kommen. Bei ca. 25 bis ca. 50 Gew.-% Polyether im PEBSU erhält man im allgemeinen weiche Materialien mit Bruchdehnungen über 100 %, die z. B. für Katheter, Blutschläuche etc. in Frage kommen.

### Beispiele

### Beispiel 1

58,5 g eines handelsüblichen Polysulfons auf Bisphenol A-Basis (Ultrason^{R} S der BASF AG, Ludwigshafen, Deutschland), 6,5 g eines handelsüblichen Polyethylenglykols (Breox 8000 der Fa. BP Chemicals, Sunbury-on-Thames, U.K.), 200 ml DMSO, 65 mlToluol und 5,6 g Kalium-carbonat (99 %ig) werden unter Rückfluß 9 h auf 144 - 147°C erhitzt. Zur Isolierung des Produkts wird die auf Raumtemperatur abgekühlte Lösung unter gutem Rühren mit 100 g Isopropanol, anschließend mit 200 g n-Hexan versetzt. Das ausgefallene Polymer wird zweimal mit Wasser gewaschen und bei 70°C im Wasserstrahlvakuum getrocknet.

Das erhaltene Polyetherblockcopolysulfon hat eine relative Lösungsviskosität ηᵣₑₗ von 1,20 (0,5-%ig in Methylenchlorid bei 20°C) und nach Extraktion mit Methanol am Soxhlet (6 h) einen Polyethylenglykol-Gehalt von 3,6 Gew.-% (¹H-NMR).

Die Untersuchung des PEBSU mittels Gel-Permeations-Chromatographie ergibt ein Molekulargewicht (Gewichtsmittel, Standard Polystyrol) von ca. 37.000 Dalton. Die ¹H-NMR-Untersuchung einzelner Fraktionen des Eluats dieser GPC-Untersuchung beweist den chemischen Einbau der Polyethylenglykol-Segmente. Freies Polyethylenglykol ist nach GPC nicht nachweisbar.

### Beispiel 2

40 g eines gemäß US-P 4.108.837 (Union Carbide) hergestellten Polysulfons aus 4,4'-Dichlordiphenylsulfon und Bisphenol A mit einer relativen Lösungsviskosität ηᵣₑₗ von 1,515, 4,44 g (Breox 8000), 127 ml DMSO, 50 ml Toluol und 19,0 g Kaliumcarbonat (99 %ig) werden unter Rückfluß 10 h auf 147 - 149°C erhitzt. Die Reaktionsmischung wird entsprechend Beispiel 1 aufgearbeitet.

Nach ¹H-NMR sind in dem gebildeten Polyetherblockcopolysulfon (ηᵣₑₗ = 1,36) 8,5 Gew.-% Polyethylenglykol-Segmente enthalten.

### Beispiel 3

17,5 g eines Polysulfons auf Basis 1,1-Bis-(4-hydroxyphenyl)-3,3,5-trimethylcyclohexan (TMC-Bisphenol) entsprechend DE-OS 3.833.385 mit einer relativen Viskosität ηᵣₑₗ von 1,267, 4,4 g (Breox 8000), 40 ml DMSO, 30 ml Toluol und 7,0 g Kaliumcarbonat werden unter Rückfluß 6 h auf 140 - 147°C erhitzt. Die Reaktionsmischung wird entsprechend Beispiel 1 aufgearbeitet.

Nach ¹H-NMR sind in dem gebildeten Polyetherblockcopolysulfon (ηᵣₑₗ = 1,21) 12,9 Gew.-% Polyethylenglykol-Segmente enthalten.

### Beispiel 4

17,5 g eines Polysulfons auf Basis TMC-Bisphenol entsprechend DE-OS 3.833.385 mit einer relativen Viskosität ηᵣₑₗ von 1,267, 1,94 g (Breox 8000), 40 ml DMSO, 30 ml Toluol und 7,0 g Kaliumcarbonat werden unter Rückfluß 6 h auf 147 - 155°C erhitzt. Die Reaktionsmischung wird entsprechend Beispiel 1 aufgearbeitet.

Nach ¹H-NMR sind in dem gebildeten Polyetherblockcopolysulfon (ηᵣₑₗ = 1,22) 7,94 Gew.-% Polyethylenglykol-Segmente enthalten.

### Beispiel 5

22,1 g eines gemäß US-P 4.108.837 (Union Carbide) hergestellten Polysulfons aus 4,4'-Dichlordiphenylsulfon und Bisphenol A mit einer relativen Lösungs-viskosität ηᵣₑₗ von 1,558, 2,46 g Polytetrahydrofuran (Terathane 2000, Du Pont, Wilmington, USA), 65 ml DMSO, 35 ml Toluol und 10,5 g Kaliumcarbonat (99 %ig) werden unter Rückfluß 4 h auf 150°C erhitzt.

Nach ¹H-NMR sind in dem gebildeten Polyetherblockcopolysulfon (ηᵣₑₗ = 1,25) 7,1 Gew.-% Polytetrahydrofuran-Segmente enthalten.

### Beispiel 6

22,1 g eines gemäß US-P 4.108.837 (Union Carbide) hergestellten Polysulfons aus 4,4'-Dichlordiphenylsulfon und Bisphenol A mit einer relativen Lösungsviskosität ηᵣₑₗ von 1,479, 2,46 g (Breox 8000), 65 ml DMSO, 35 ml Toluol und 1,75 g Kaliumcarbonat (99 %ig) werden unter Rückfluß 6,5 h auf 153°C erhitzt. Die Reaktionsmischung wird entsprechend Beispiel 1 aufgearbeitet.

Nach ¹H-NMR sind in dem gebildeten Polyetherblockcopolysulfon (ηᵣₑₗ = 1,396) 9,4 Gew.-% Polyethylenglykol-Segmente enthalten.

## Patentansprüche

1. Verfahren zur Herstellung von Polyetherblockcopolysulfonen, **dadurch gekennzeichnet, dass** ein aromatisches Sulfonpolymer (A) mit einem aliphatischen Polyether mit im Mittel mindestens einer endständigen OH-Funktionen (B) umgesetzt wird.

2. Verfahren gemäß Anspruch 1 mit einem aliphatischen Polyether mit im Mittel mindestens zwei endständigen OH-Funktionen.

3. Verfahren gemäß Anspruch 1, **dadurch gekennzeichnet, dass** die Komponenten (A) und (B) in Gegenwart eines basischen Katalysators (C) umgesetzt werden.

4. Verfahren gemäß Anspruch 1 bis 3, **dadurch gekennzeichnet, dass** die Reaktion in einem dipolaren aprotischen Lösemittel (D) durchgeführt wird.

5. Verfahren gemäß einem der Ansprüche 1 bis 4, **dadurch gekennzeichnet, dass** als aromatisches Sulfonpolymer (A) ein Sulfonpolymer der allgemeinen Formel
- E-Ar¹-SO₂-Ar²-
worin
E ein zweibindiger Diphenolat-Rest ist und
Ar¹ und Ar² gleiche oder verschiedene gegebenenfalls substituierte difunktionelle aromatische Reste mit 6 bis 50 Kohlenstoffatomen bedeuten, eingesetzt wird.

6. Verfahren gemäß Anspruch 5, **dadurch gekennzeichnet, dass**
Ar¹ und Ar² unabhängig voneinander für einen gegebenenfalls durch C₁-C₆-Alkyl und/oder C₁-C₆-Alkoxy substituierten aromatischen Rest mit 6 bis 10 Kohlenstoffatomen stehen und
E für einen Rest der Formel (II) steht, 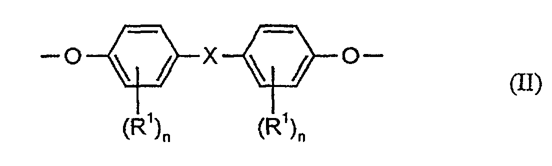
wobei
R¹ jeweils unabhängig voneinander, gleich oder verschieden für Wasserstoff, Halogen, C₁-C₆-Alkyl oder C₁-C₆-Alkoxy steht,
n für eine ganze Zahl 1 bis 4 steht,
X für eine chemische Bindung, -CO-, -O-, -S-, -SO₂-, für Alkylen, Alkyliden oder Cycloalkylen steht, wobei die 3 letztgenannten Reste durch Substituenten, ausgewählt aus Halogen, gegebenenfalls durch Fluor, Chlor, Brom, C₁-C₄-Alkyl- und/oder C₁-C₄-Alkoxy- substituiertes Phenyl oder Naphthyl substituiert sein können und wobei Cycloalkylen zusätzlich noch durch C₁-C₆-Alkyl substituiert sein kann.

7. Verfahren gemäß Anspruch 6, wobei im Falle, dass X für Cycloalkyl steht, X für einen Rest der Formel (III) steht, 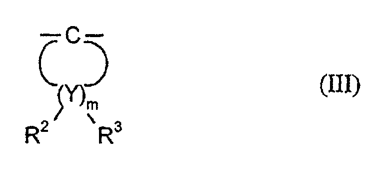 worin
Y für Kohlenstoff steht,
R² und R³ für jedes Y individuell wählbar, unabhängig voneinander Wasserstoff oder C₁-C₆-Alkyl stehen und
m für eine ganze Zahl von 3 bis 12 steht.

8. Verfahren gemäß Anspruch 6, wobei E für einen Rest der Formel (IV) steht, 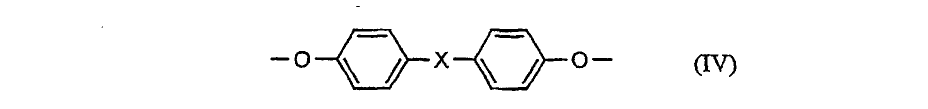 wobei
X für eine chemische Bindung, für C₁-C₈-Alkylen, C₂-C₁₀-Alkyliden oder Cycloalkylen steht, wobei Cycloalkylen zusätzlich noch durch C₁-C₆-Alkyl substituiert sein kann.

9. Verfahren gemäß Anspruch 8, wobei im Falle, dass X für Cycloalkyl steht, X für einen Rest der Formel (III) steht, 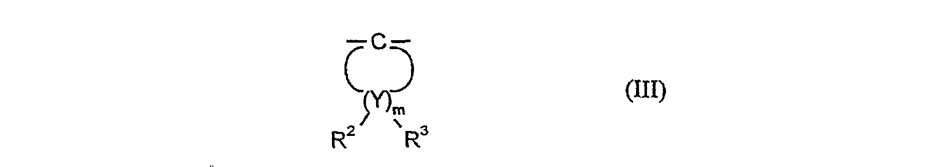 worin
Y für Kohlenstoff steht,
R² und R³ für jedes Y individuell wählbar, unabhängig voneinander Wasserstoff oder C₁-C₆-Alkyl stehen und
m für eine ganze Zahl von 3 bis 12 steht.

10. Verfahren gemäß einem der Ansprüche 1 bis 9, **dadurch gekennzeichnet, dass** als aliphatischer Polyether (B) ein Polyether der allgemeinen Strukturformel
H-(O-(CH₂-CH₂)ₙ-)ₘ-OH
mit n = 1 oder 2 und m = natürliche Zahl von 1 bis 500 eingesetzt wird.

11. Verfahren gemäß einem der Ansprüche 1 bis 10, **dadurch gekennzeichnet, dass** als basischer Katalysator (C) ein Alkalimetallcarbonat aus der der Gruppe Lithiumcarbonat, Natriumcarbonat oder Kaliumcarbonat eingesetzt wird.

12. Verfahren gemäß einem der Ansprüche 1 bis 11, **dadurch gekennzeichnet, dass** als dipolares aprotisches Lösemittel ein Lösemittel aus der Gruppe Dimethylsulfoxid, Sulfolan, N-Methyl-pyrrolidon, N-Methyl-caprolactam, N,N-Dimethylacet-amid oder Mischungen davon eingesetzt wird.

## Claims

1. A process for the production of polyether block copolysulfones, **characterised in that** an aromatic sulfone polymer (A) is reacted with an aliphatic polyether having on average at least one terminal OH function (B) .

2. A process according to claim 1 with an aliphatic polyether having on average at least two terminal OH functions.

3. A process according to claim 1, **characterised in that** components (A) and (B) are reacted in the presence of a basic catalyst (C).

4. A process according to claims 1 to 3, **characterised in that** the reaction is performed in a dipolar aprotic solvent (D).

5. A process according to one of claims 1 to 4, **characterised in that** the aromatic sulfone polymer (A) used is a sulfone polymer of the general formula
- E - Ar¹ - SO₂ - Ar² -
in which
E is a divalent diphenolate residue and
Ar¹ and Ar² mean identical or different, optionally substituted difunctional aromatic residues with 6 to 50 carbon atoms.

6. A process according to claim 5, **characterised in that**
Ar¹ and Ar² mutually independently denote an aromatic residue with 6 to 10 carbon atoms optionally substituted by C₁-C₆ alkyl and/or C₁-C₆ alkoxy and
E denotes a residue of the formula (II), 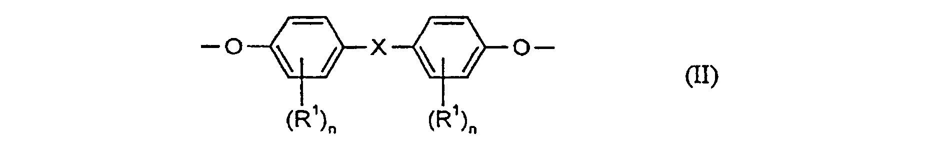
wherein
R¹ in each case mutually independently, identically or differently denotes hydrogen, halogen, C₁-C₆ alkyl or C₁-C₆ alkoxy,
n denotes an integer from 1 to 4,
X denotes a chemical bond, -CO-, -O-, -S-, -SO₂-, alkylene, alkylidene or cycloalkylene, wherein the 3 latter-stated residues may be substituted by substituents selected from among halogen and phenyl or naphthyl optionally substituted by fluorine, chlorine, bromine, C₁-C₄ alkyl and/or C₁-C₄ alkoxy and wherein cycloalkylene may additionally also be substituted by C₁-C₆ alkyl.

7. A process according to claim 6, wherein, in the event that X denotes cycloalkyl, X denotes a residue of the formula (III) 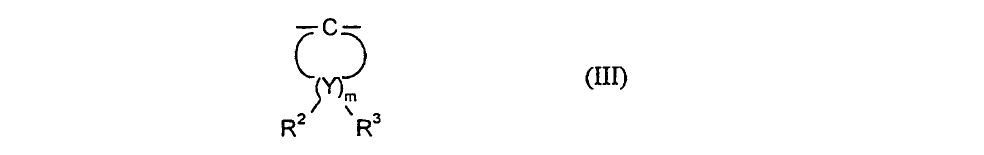 in which
Y denotes carbon,
R² and R³ individually selectably for each Y mutually independently denote hydrogen or C₁-C₆ alkyl and
m denotes an integer from 3 to 12.

8. A process according to claim 6, wherein E denotes a residue of the formula (IV), 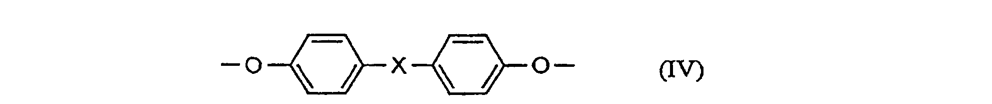 wherein
X denotes a chemical bond, C₁-C₈ alkylene, C₂-C₁₀ alkylidene or cycloalkylene, wherein cycloalkylene may additionally also be substituted by C₁-C₆ alkyl.

9. A process according to claim 8, wherein, in the event that X denotes cycloalkyl, X denotes a residue of the formula (III) 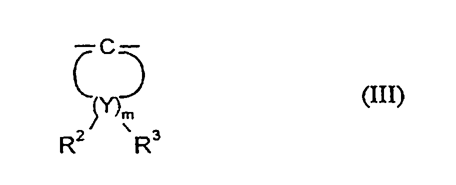 in which
Y denotes carbon,
R² and R³ individually selectably for each Y mutually independently denote hydrogen or C₁-C₆ alkyl and
m denotes an integer from 3 to 12.

10. A process according to one of claims 1 to 9, **characterised in that** the aliphatic polyether (B) used is a polyether of the general structural formula
H-(O-(CH₂-CH₂)ₙ-)ₘ-OH
where n = 1 or 2 and m = a natural number from 1 to 500.

11. A process according to one of claims 1 to 10, **characterised in that** the basic catalyst (C) used is an alkali metal carbonate from the group comprising lithium carbonate, sodium carbonate or potassium carbonate.

12. A process according to one of claims 1 to 11, **characterised in that** the dipolar aprotic solvent used is a solvent from the group comprising dimethyl sulfoxide, sulfolane, N-methylpyrrolidone, N-methylcaprolactam, N,N-dimethylacetamide or mixtures thereof.

## Revendications

1. Procédé de préparation de copolycondensats séquencés polyéthers-polysulfones, **caractérisé en ce que** l'on fait réagir un polymère de sulfone aromatique (A) avec un polyéther aliphatique avec en moyenne, au moins une fonction OH terminale (B).

2. Procédé suivant la revendication 1, avec un polyéther aliphatique avec en moyenne, au moins deux fonctions OH terminales.

3. Procédé suivant la revendication 1, **caractérisé en ce que** les composants (A) et (B) sont mis à réagir en présence d'un catalyseur basique (C).

4. Procédé suivant les revendications 1 à 3, **caractérisé en ce que** la réaction est réalisée dans un solvant dipolaire aprotique (D).

5. Procédé suivant l'une quelconque des revendications 1 à 4, **caractérisé en ce que** l'on met en oeuvre comme polymère de sulfone aromatique (A), un polymère de sulfone de la formule générale :
- E - Ar¹ - SO₂ - Ar² -
où
E est un reste diphénolate bivalent, et
Ar¹ et Ar² signifient des restes aromatiques difonctionnels, identiques ou différents, le cas échéant substitués, ayant 6 à 50 atomes de carbone.

6. Procédé suivant la revendication 5, **caractérisé en ce que** Ar¹ et Ar² signifient, indépendamment l'un de l'autre, un reste aromatique le cas échéant substitué par un radical alcoyle en C₁-C₆ et/ou alcoxy en C₁-C₆, ayant 6 à 10 atomes de carbone, et
E représente un reste de la formule (II) : 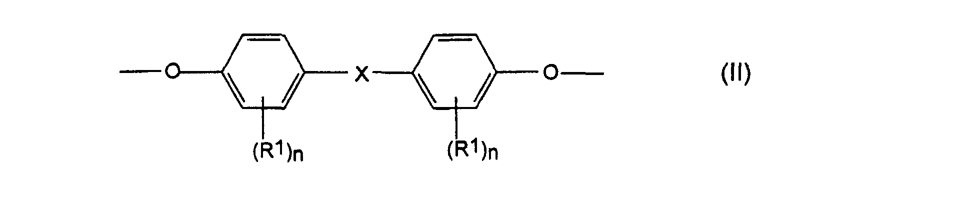 où
R¹ représente chaque fois indépendamment l'un de l'autre, de manière identique ou différente, l'atome d'hydrogène, un atome d'halogène, un radical alcoyle en C₁-C₆ ou alcoxy en C₁-C₆ ;
n représente un nombre entier allant de 1 à 4 ;
X représente une liaison chimique, -CO-, -O-, - S-, -SO₂-, un radical alcoylène, alcoylidène ou cycloalcoylène, où les 3 restes indiqués en dernier peuvent être substitués par des substituants choisis parmi un atome d'halogène, le cas échéant par l'atome de fluor, de chlore, de brome, un radical phényle ou naphtyle substitué par un radical alcoyle en C₁-C₄ et/ou alcoxy en C₁-C₄, et où un radical cycloalcoylène peut encore être substitué par un radical alcoyle en C₁-C₆.

7. Procédé suivant la revendication 6, où dans le cas où X représente un radical cycloalcoyle, X représente un reste de la formule (III) : 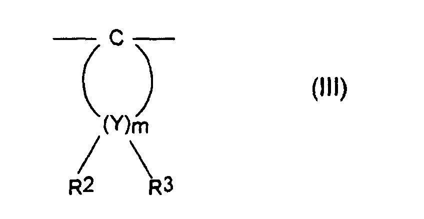 où
Y représente l'atome de carbone,
R² et R³, pouvant être choisis individuellement pour chaque Y, représentent indépendamment l'un de l'autre, l'atome d'hydrogène ou un radical alcoyle en C₁-C₆, et
m représente un nombre entier allant de 3 à 12.

8. Procédé suivant la revendication 6, où E représente un reste de la formule (IV) : 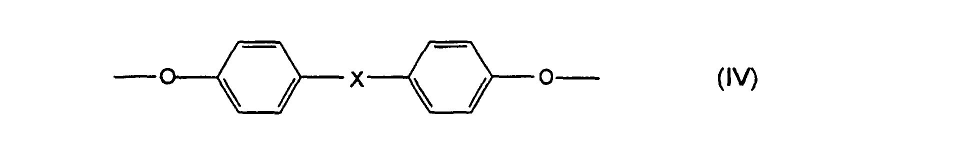 où
X représente une liaison chimique, un radical alcoylène en C₁-C₈, alcoylidène en C₂-C₁₀ ou cycloalcoylène, où un radical cycloalcoylène peut encore être substitué par un radical alcoyle en C₁-C₆.

9. Procédé suivant la revendication 8, où dans le cas où X représente un radical cycloalcoyle, X représente un reste de la formule (III) : 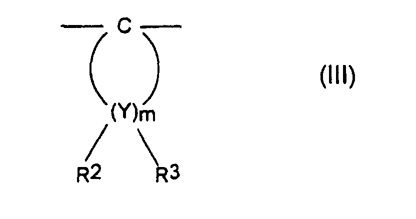 où
Y représente l'atome de carbone,
R² et R³, pouvant être choisis individuellement pour chaque Y, représentent indépendamment l'un de l'autre, l'atome d'hydrogène ou un radical alcoyle en C₁-C₆, et
m représente un nombre entier allant de 3 à 12.

10. Procédé suivant l'une quelconque des revendications 1 à 9, **caractérisé en ce que** l'on met en oeuvre comme polyéther aliphatique (B), un polyéther de la formule de structure générale :
H- (O-(CH₂-CH₂)ₙ-)ₘ-OH
avec n = 1 ou 2 et m= un nombre naturel allant de 1 à 500.

11. Procédé suivant l'une quelconque des revendications 1 à 10, **caractérisé en ce que** l'on met en oeuvre comme catalyseur basique (C), un carbonate de métal alcalin parmi le groupe des carbonate de lithium, carbonate de sodium ou carbonate de potassium.

12. Procédé suivant l'une quelconque des revendications 1 à 11, **caractérisé en ce que** l'on met en oeuvre comme solvant dipolaire aprotique, un solvant du groupe des diméthylsulfoxyde, sulfolanne, N-méthylpyrrolidone, N-méthylcaprolactame, N,N-diméthylacétamide ou leurs mélanges.
